# EUROPEAN PATENT APPLICATION

(11) **EP 3 575 147 A1**
(43) Date of publication of application: **04.12.2019**
(21) Application number: 19177234.2
(22) Date of filing: 29.05.2019
(51) Int. Cl.: B60P 7/08, B60P 7/13, B64D 9/00

(54) **FREIGHT SECUREMENT DEVICE**

(30) Priority: 31.05.2018 NL 2021033
(71) Applicant: Bredenoord Holding B.V., 7325 WT Apeldoorn (NL)
(72) Inventor: de Graaf, Dirkjan Elbertus, 7325 WT Apeldoorn (NL)
(74) Representative: V.O.

(57) **Abstract**

A securement body for securing a freight during transportation comprises a first body part arranged to be received in an internal space of a support frame, the first body part comprising a first latching element for latching the first body part to the support frame by moving the first body part in the internal space, and a second body part opposite the first body part arranged to be received in a freight frame comprising a latching opening adapted to receive a second latching element therethrough for latching the freight to the second body part. This securement body forms a connection between the freight frame and the support platform wherein the freight frame - provided at a bottom of a transported device - can be latched to the first body part, and the support frame - provided on top of a vehicle - is latched to the second body part.

## Description

### TECHNICAL FIELD

The present invention relates to a freight securement device for securing a freight during transportation.

### BACKGROUND

Securing a freight onto a loading platform of a transportation vehicle is often a time-consuming and inefficient step in the transportation chain. Transportation of various sized freights requires tailored securing solutions to safely secure the freight onto a loading platform of a transportation vehicle. Conventional freight securement systems use ropes or lashing straps to fixate various sized freights during transportation. A freight is positioned onto a loading platform of a vehicle and both ends of a strap are anchored to the loading platform on either side of the freight. The strap is guided over the top of the freight and lashed by means of a lashing mechanism, such as a ratchet. Large and heavy freights require multiple straps to safely secure the freight onto the platform.

Although ropes or lashing straps provide the possibility to adapt the securement positions to the specific size of the freight, the degree of fixation greatly relies on the competence of the professional. Also the length of the ropes and/or lashes required for securement of the freight to be transported depend on the size of the freight. As such either a multitude of straps of various lengths need to be provided matched to different freight sizes to be transported or a single sized lash is to be used which tends to be too long for securing smaller freights. Ropes and straps are furthermore notorious to get tangled, and tend to wear out quickly which may result in dangerous situations.

### SUMMARY

It is preferred to provide a more efficient system for securing load to platform. The various aspects provide a securement device which can provide a relatively high level of safety and ease of use.

To address these issues, the aspects provide a freight securement body, a support frame, a freight frame, and a freight securement assembly as defined in one or more of the appended claims.

Particularly, according to the invention there is provided a securement body for securing a freight during transportation comprising a first body part arranged to be received in an internal space of a support frame, the first body part comprising a first latching element for latching the first body part to the support frame upon movement of the first body part in the internal space relative to the support frame, and a second body part opposite the first body part arranged to be received in a freight frame comprising a latching opening adapted to receive a second latching element therethrough for latching the freight to the second body part.

The securement body according to the invention forms a connection between the freight frame and the support platform wherein the freight frame - provided at a bottom of a device to be transported - can be latched to the first body part, and the support frame - provided on top of a vehicle or other loading platform - can be latched to the second body part. The securement body may for instance be an integral body of a single piece but can also be composed out of multiple parts. The first and second body part are preferably coupled to one another.

Optionally, the first and second body parts form either end of the securement body, wherein the securement body is substantially rigid. First and second body part of the securement body may also be rigidly coupled to one another such that a substantially rigid securement body is formed. It is preferred that, when the first body part of the securement body is received in the internal cavity of the support frame, the second body part of the securement body extends from the support frame.

In a particular embodiment the securement body according to the invention is characterised in that the latching opening of the second body part comprises a through-hole. The through-hole provides an opening through the second body part of the securement body to form reliable and strong latching of the freight frame to said second body part.

In a particular embodiment the securement body according to the invention is characterised in that the first latching element is a protrusion. A protrusion can form a male part of a latching mechanism, engageable by a female part of a latching mechanism provided in the internal cavity of the support frame. For example, the first body part of the securement body can be received through the access opening of the support frame in the internal space in a first state. After a movement of the first body part relative to the support frame the first body part is in a second state wherein the protrusion can be occluded by a part of the support frame thereby latching the first body part to the support frame.

A further embodiment of the securement body according the invention is characterised in that the securement body has a substantially cylindrical shape having a central axis. Such a shape is beneficial for its circular symmetry around the central axis such that the securement body can be inserted into the support frame and into the freight frame in a plurality of angular orientations around the central axis. Also all cross-sectional areas transverse to the central axis are substantially similar to one another which facilitates insertion of the first body part of the securement body into the internal space of the support frame through the access opening, as well as insertion of the second body part of the securement body into the freight frame.

Optionally, the securement body may have a cross-sectional area transverse to the central axis other than circular shaped, for example annular, or square. Preferably, the securement body according to the invention comprises two protrusions protruding radially outward from the central axis of the cylindrical shaped securement body, preferably located on opposite sides of the first body part of the securement body. Two protrusions provide secure latching of the first body part of the securement body to the support frame. The first latching element may further be arranged to withstand loads exerted on the securement body, for example arising from g-forces during transportation of the freight.

As such, two protrusions can divide the load. The two protrusions may for example be identically shaped such that the first body part of the securement body is rotationally symmetric around the central axis of the cylindrical shaped securement body with respect to a 180 degrees rotation around said central axis.

In a further preferred embodiment the securement body according to the invention further comprises a radially extending flange arranged between the first body part and the second body part to abut against a surface of the support frame. The flange provides a stop to position the securement body relative to the support frame such that the first body part is provided in the internal cavity of the support frame and the second body part extends from the surface of the support frame. The flange is supported by the surface of the support frame and prevents the securement body from being inserted into the internal space of the frame too far.

In a further preferred embodiment the securement body according to the invention is characterised in that the second body part comprises a guiding element arranged to guide the reception of the second body part into the freight frame. A guiding element allows reception of the second body part in the freight frame when an opening in the freight frame for receiving the second body part is not aligned with the second body part.

Optionally, the guiding element is a substantially conical shaped portion arranged at a distal end of the second body part. A conical shape provides guidance in all radial directions with respect to a base of the substantially conical shaped portion. In this way any radial misalignment, smaller than a radius of the base of the substantially conical shaped portion, of a freight frame opening with the second body part of the securement body is anticipated and results in an reception of the second body part in the freight frame.

In a further preferred embodiment the securement body according to the invention is characterised in that the first latching element is arranged to latch the first body part to the support frame upon a twisting movement of the first body part relative to the support frame in the internal space of the support frame. To latch the first body part to the support frame by a twisting movement in the internal space relative to the support frame allows the internal space and access opening size to be of relatively small size compared to a translational latching movement of the first body part in the internal cavity.

According to the invention there is provided a support frame delimiting an internal space accessible through an access opening, wherein the internal space is adapted to receive the first body part of the securement body according to any one claims 1-9 through the access opening and to latch the first body part of the securement body with the support frame upon a movement of the first body part of the securement body in the internal space relative to the support frame. The first body part of the securement body and support frame are mutually adapted to be coupled to one another.

In a further preferred embodiment the support frame according to the invention is characterised in that the support frame is part of a loading platform for a vehicle, wherein the access opening of the support frame is levelled with a top surface of the loading platform. It is preferred that a loading platform including the support frame forms a substantially flat surface to receive a freight onto such that the internal space of the support frame lies below the top surface of the loading platform and is accessible through the access opening being levelled with the top surface. In this way, there are no objects projecting from the top surface of the loading platform which may form an obstacle for the positioning of the freight. The support frame may be an integral part of the loading platform of a vehicle or may be connected to the loading platform.

In a further preferred embodiment the support frame according to the invention is characterised in that the shape of the access opening closely resembles a cross section of the first body part of the securement body. In this way the size of the access opening is minimised to provide sufficient support surface area on a loading platform supporting the freight during transportation. In addition, a tight fit between the securement body and the support frame can be accomplished that restrains the securement body in the internal space in a lateral plane parallel to the access opening. Optionally, the internal space of the support frame closely resembles the shape of the first body part of the securement body in such way to provide a snug fit of the securement body in the internal space of the support frame. This restrains the securement body in a lateral plane parallel to the access opening.

In a further preferred embodiment the support frame according to the invention is characterised in that the internal space of the support frame is accessible through a plurality of consecutive access openings equidistantly spaced along a straight line. For example, the support frame may be an elongated hollow structure wherein the internal space is accessible through a plurality of access openings. Multiple equidistantly spaced access openings provide adaptation of the positioning of the securement body or securement bodies to the freight size to be transported. In addition, multiple equidistantly spaced access openings can each be provided with a securement body to couple the freight to the support frame at multiple locations, giving extra security during transportation of the freight. For example two securement bodies can be provided through different access openings in the internal space wherein the spacing between the two securement bodies is matched to the freight frame of the freight to be transported.

Equidistant spacing between consecutive access openings can be advantageous as it provides a standardisation in loading positions and freight sizes. The spacing of the consecutive access openings may be in concordance with openings provided in a freight frame as to easily match the securement bodies positions to the size of the freight frame. The alignment of the access opening provides easy latching of the securement body or securement bodies to the freight frame, for example by means of a rod.

In a further preferred embodiment the support frame delimits a plurality of internal spaces, each internal space being accessible through respective consecutive access openings equidistantly spaced along a straight line. Multiple internal spaces can be provided with an securement body to couple a freight frame to the support frame at multiple locations, giving extra security during transportation of the freight.

According to the invention there is further provided a freight frame arranged to receive the second body part of the securement body according to any one of claims 1-9 in a frame cavity located in a bottom portion of the freight frame, the freight frame comprising at least one through-hole in communication with the frame cavity, wherein the at least one through-hole is arranged to be aligned with the latching opening of the second body part of the securement body, and wherein the through-hole is further adapted to receive the second latching element. The freight frame can be an integral part of the freight or can be a separate structure. Preferably the freight is coupled to the freight frame. The freight frame may for example be a structure providing support and /or protection to the freight during transportation. The freight frame may also be a container of the freight. A frame cavity in the bottom of the freight container allows reception of the second body part of the securement body.

The freight can for example be lowered onto the securement body when the first body part of the securement body is latched in the internal space of the support frame. Optionally, the freight frame comprises multiple frame cavities to be able to receive the second body part of the securement body at different locations of the freight frame. In this way the freight frame can be latched to the securement body at multiple locations providing extra security during transportation. The freight frame can be latched to the second body part of the securement body, when the second body part of the securement body is provided in the frame cavity, by providing the second latching element through the through-hole of the freight frame into the frame cavity of the freight frame thereby latching the second body part of the securement body to the freight frame.

According to the invention there is further provided a freight securement assembly comprising a securement body according to any one of claims 1-9, a support frame according to any one of claims 10-14 and a freight frame according to claim 15. The freight frame can be secured to the support frame when the first and second body part of the securement body are provided in and latched to the support frame and freight frame respectively.

In a further preferred embodiment the freight securement assembly further comprises a further securement body. Multiple securement bodies allow for multiple securing positions for securing the freight frame to the support frame vehicle providing extra safety and security during transportation. Preferably, the latching openings of the securement bodies are aligned. When the first body part of the securement bodies are provided in and latched to the support frame it is preferred that the latching openings of the securement bodies are aligned to allow easy latching of the second body part of the securement body to the freight frame, for example by insertion of a rod through the through-holes of the freight frame and through the latching openings of the securement bodies, the through-holes of the freight frame being aligned with the latching openings.

In a further preferred embodiment the freight securement assembly further comprises a second latching element for latching the freight frame to the second body part of the securement body. The second latching element can be provided through the freight frame and through the latching openings of the second body part of the securement body to latch the securement body to the freight frame. Preferably, the second latching element is a rod with a length dimension longer than a width dimension of the support frame. The rod can be provided through the freight frame and through the latching openings of the second body part of the securement body and will protrude from the freight frame on at least one side to allow easy securement of the rod to the freight frame in such a way that the rod will be restraint relative to the freight frame during transportation. Preferably, at least one end of the second latching element is provided with a spring element for securing the rod to the freight frame.

In a further preferred embodiment the freight securement assembly according to the invention is characterised in that the through-hole of the second body part of the securement body is parallel to a top surface of a loading platform of the vehicle. This allows easy insertion of the second latching element through the through-hole of the freight frame and the second body part of the securement body.

### BRIEF DESCRIPTION OF THE DRAWINGS

The various aspects and embodiments thereof will now be discussed in further detail in conjunction with drawings.
Figure 1 shows a securement body
Figure 2 shows a front view of a securement body
Figure 3 shows a top view of a support frame
Figure 4 shows a top view of an assembly of a securement body with a support frame.
Figure 5 shows an side view assembly of a securement body with a support frame
Figure 6A shows a front view of a freight frame.
Figure 6B shows a bottom view of a freight frame.
Figure 7 shows a part of a loading platform of vehicle comprising an assembly of a support frame with a securement body.

### DETAILED DESCRIPTION

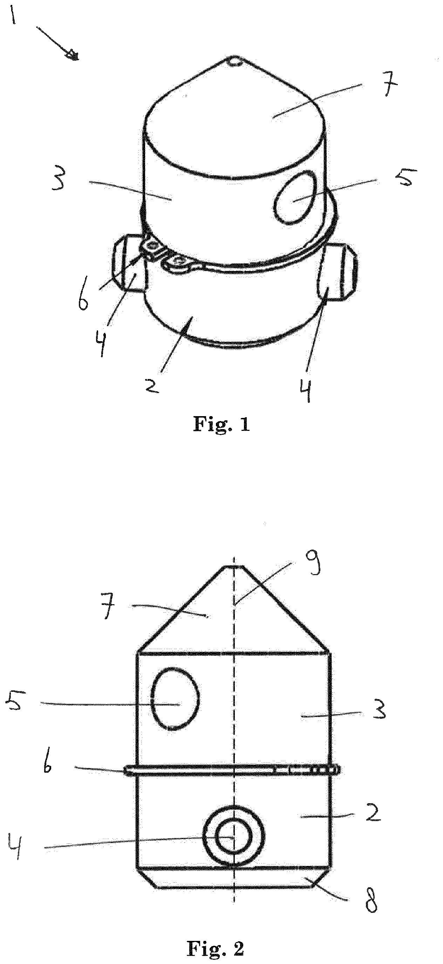

Figure 1 shows an embodiment of a securement body 1 comprising a first body part 2 and a second body part 3 wherein the securement body is substantially cylindrical shaped. The first body part is arranged to be received in an internal space of a support frame. The first body part comprises a first latching element 4 embodied as a cylindrical shaped rod provided through the first body part 2 wherein both ends of the first latching element 4 protrude from the first body part 2 of the securement body 1.

The first body part 2 can be received in an internal space of the support frame through an access opening wherein latching is established upon a twisting movement of the securement body with respect to the support frame in such a way that the first latching element 4 is occluded by an overhang of the support frame.

The second body part comprises a latching opening 5 embodied as a through-hole adapted to receive a second latching element therethrough for latching a freight frame to the second body part 3 of the securement body 1. At a border of the first body part 2 with the second body part 3 a radially extending flange 6 is provided which is arranged to abut against the support frame after insertion of the first body part 1 into the support frame in order to keep the second body part 3 extending from the support frame.

In the embodiment of figure 1 the radially extending flange 6 is a circlip provided partly in a recess of the securement body 1. The second body part further comprises a conically shaped guiding element 7 for guiding the reception of the second body part into the freight frame.

Figure 2 shows a side view of the embodiment of a securement body 1 wherein the first body part 2 comprises a cut edge 8 for providing easy insertion into the internal space of the support frame. Also a central axis 9 of the securement body is denoted by the dashed line. The latching opening 5 and first latching element 4 are angularly offset with respect to the central axis such that the first latching element is oriented in a direction transvers to a transportation direction after latching of the first latching element 4 to the support frame.

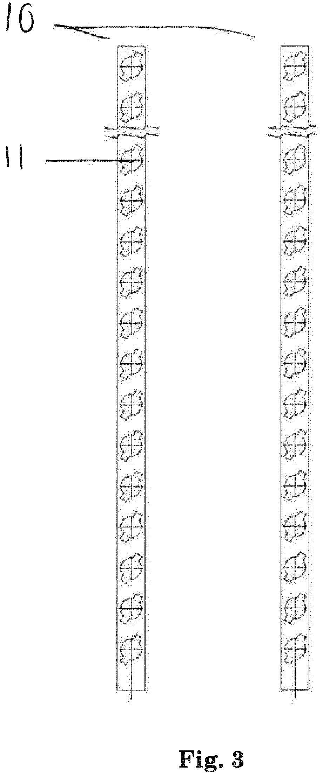

Figure 3 shows a top view of a particular embodiment of a support frame 10 comprising two parallel elongated hollow structures each comprising multiple equidistantly spaced access openings 11 providing access to the internal space of the support frame. The access openings are identical having a circular shaped centre with two radially extending protrusions to allow insertion of the securement body, such that a securement body can be received through any access opening dependent on the size of the freight.

The shape of the access openings 10 closely resembles a cross section of the securement body 1 transverse to the central axis 9 of the securement body through the first latching element 4. This minimises the size of the access opening 11 and provides a snug fit between the support frame 10 and the securement body 1. While positioned in the internal cavity of the support frame 10 wherein the second body part 3 extends through the access opening 11 from the support frame 10 the securement body is restraint by the support frame from moving laterally in a plane parallel to the support frame.

The first body part 2 of the securement body 1 can be inserted into the internal space of the support frame through the access opening 11. Latching between the first body part 2 and the support frame 10 can be achieved by a twisting movement of the securement body 1 around the central axis 9 relative to the support frame 10 in such a way that the protruding first latching element 4 is occluded by an overhang of the support frame 10.

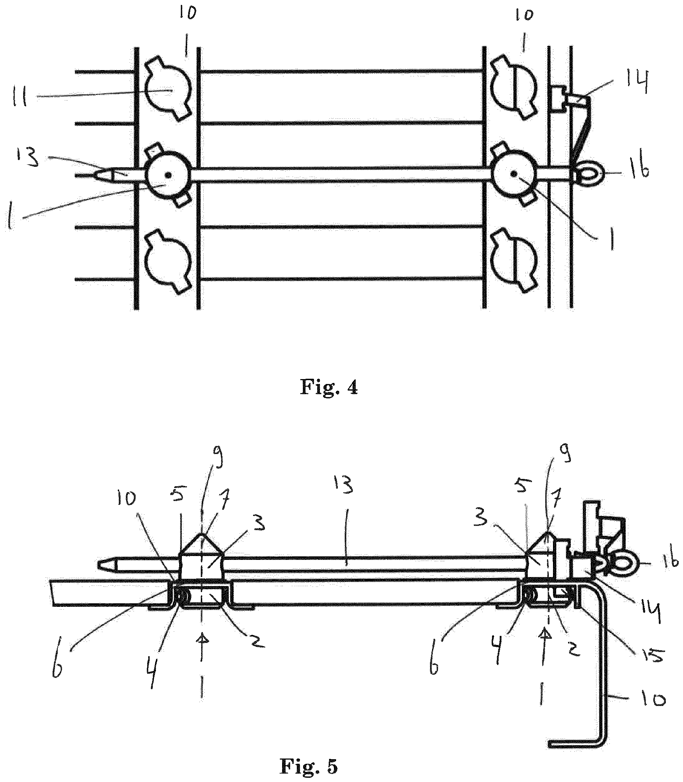

Figure 4 and 5 show an assembly of two securement bodies 1 provided in the internal space of the support frame 10 and latched to the support frame 10 in a latched configuration upon a twisting movement of the securement body 1. The flange 6 of both securement bodies abuts against the support frame, and the protruding first latching element 4 is occluded by an overhang of the support frame 10 such that the securement body is restraint in a direction along the central axis 9 of the securement body.

The latching openings 5 of both securement bodies 1 are aligned such that a second latching element 13, embodied as a rod, may be provided through the latching opening 5 of both securement bodies 1. In addition, the second latching element 13 restrains the securement bodies 1 from rotating around the central axis 9. The securement bodies are furthermore laterally constraint by the support frame, in a plane parallel to the access opening, due to the snug fit of the securement bodies 1 in the access opening 11 of the support frame 10, such that the securement bodies 1 are constraint in all directions.

The second latching element 13 can be provided through the freight frame as well, wherein the second body part 3 of the securement bodies 1 are received in a frame cavity of the freight frame such that the second latching element 13 latches the freight frame to the securement bodies. The second latching element 13 further comprises a spring element 14 embodied as a leaf spring having a T-shaped end 15 which can be hooked to the freight frame or support frame 10 in order to secure the rod.

Furthermore, the second latching element 13 can be provided with a handle 16 at an end of the second latching element 13, such as an an eye nut, for allowing easy handling of the second latching element 13.

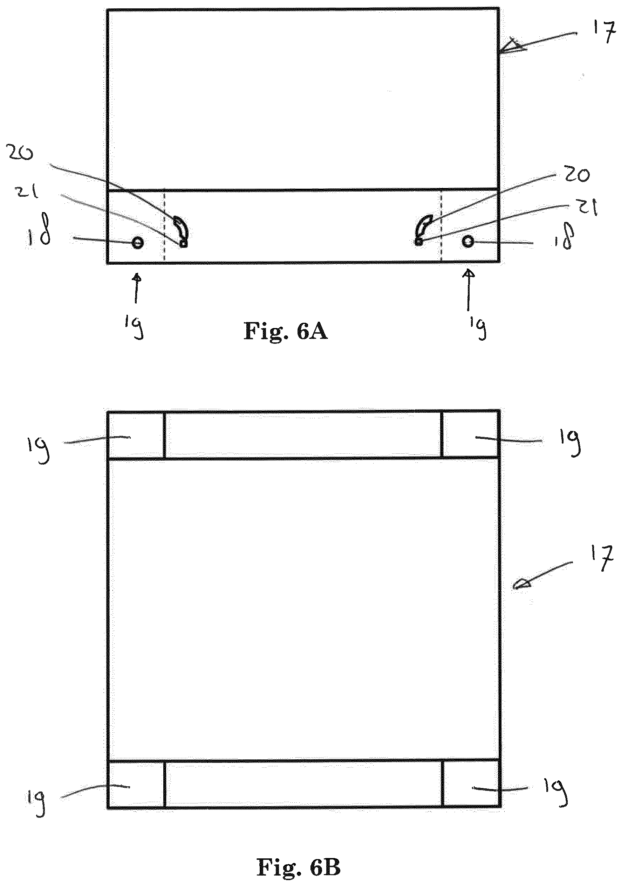

Figure 6A shows a front view of a freight frame 17 comprising two through-holes 18 in a bottom of portion of the freight frame 17. The through-hole is in communication with a frame cavity 19, indicated in figure 6A by the dashed line, in which the securement body can be received. The through-hole 18 is adapted to receive the second latching element 13 therethrough.

The freight frame 17 further comprises a first recess 20 adapted to receive the spring element 14 for latching the second latching element 13 to the freight frame 17. The T-shaped end 15 of the spring element can be hooked inside the first recess 20 behind an edge of the first recess 20. An additional optional second recess 21 may be provided in the freight frame 17 to prevent the T-shaped end 15 of the spring element 14 from unhooking out of the first recess.

Figure 6B shows the freight frame from the bottom comprising four frame cavities 19 for receiving a securement body therein. Whereas the frame cavities 19 are in Figure 6B shown as rectangular, the frame cavities or at least the openings to the frame cavities 19 preferably have a round shape substantially matching the outer circumference of the first body part 3.

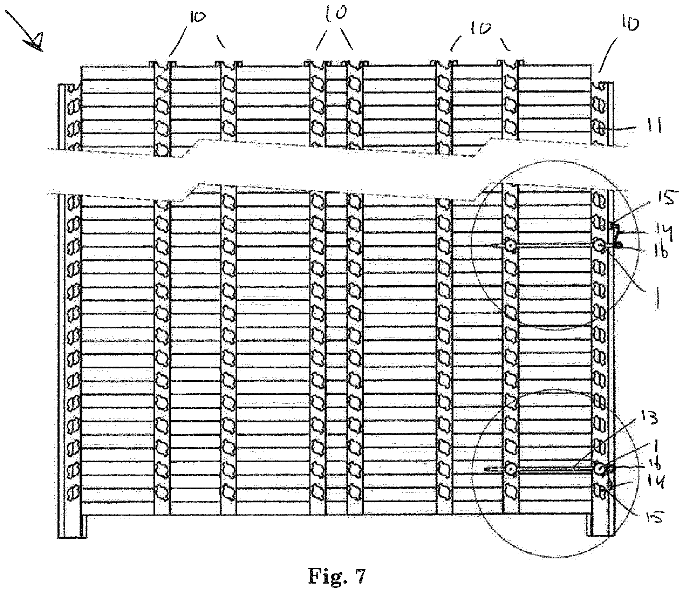

Figure 7 shows a part of a loading platform 17 comprising a support frame 10 having multiple access openings for receiving a securement body 1. Four securement bodies are provided in and latched to the support frame 10 and second latching element 13 embodied as a rod is provided through the latching openings of the securement bodies. The second latching element 13 is secured to the support frame 10 by means of a spring element 14.

Whereas the securement body 1 has been described as being movable in a rotating fashion for securing, embodiments may be envisaged as well in which the securement body 1 is required to be moved in a translating fashion.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

In the description above, it will be understood that when an element such as layer, region or substrate is referred to as being "on" or "onto" another element, the element is either directly on the other element, or intervening elements may also be present.

Furthermore, the invention may also be embodied with less components than provided in the embodiments described here, wherein one component carries out multiple functions. Just as well may the invention be embodied using more elements than depicted in the Figures, wherein functions carried out by one component in the embodiment provided are distributed over multiple components.

A person skilled in the art will readily appreciate that various parameters disclosed in the description may be modified and that various embodiments disclosed and/or claimed may be combined without departing from the scope of the invention.

## Claims

1. Securement body for securing a freight during transportation comprising
a first body part arranged to be received in an internal space of a support frame, the first body part comprising a first latching element for latching the first body part to the support frame upon movement of the first body part in the internal space relative to the support frame, and
a second body part opposite the first body part arranged to be received in a freight frame comprising a latching opening adapted to receive a second latching element therethrough for latching the freight frame to the second body part.

2. Securement body according to claim 1, wherein the securement body has a substantially cylindrical shape having a central axis.

3. Securement body according to claim 2, wherein the first latching element comprises two protrusions protruding radially outward from the central axis of the cylindrical shaped securement body, preferably located on opposite sides of the first body part of the securement body.

4. Securement body according to any of the preceding claims, further comprising a radially extending flange arranged between the first body part and the second body part to abut against a surface of the support frame.

5. Support frame delimiting an internal space accessible through an access opening, wherein the internal space is adapted to receive the first body part of the securement body according to any one claims 1-9 through the access opening and to latch the first body part of the securement body with the support frame upon a movement of the first body part of the securement body in the internal space relative to the support frame.

6. Support frame according to claim 5, wherein the support frame is part of a loading platform for a vehicle, wherein the access opening of the support frame is levelled with a top surface of the loading platform.

7. Support frame according to any one claims 5-6, delimiting a plurality of internal spaces, each internal space being accessible through respective consecutive access openings equidistantly spaced along a straight line.

8. Freight frame arranged to receive the second body part of the securement body according to any one of claims 1-4 in a frame cavity located in a bottom portion of the freight frame, the freight frame comprising at least one through-hole in communication with the frame cavity,
Wherein:
the at least one through-hole is arranged to be aligned with the latching opening of the second body part of the securement body; and
the through-hole is further adapted to receive the second latching element.

9. Freight securement assembly comprising:
- a securement body according to any one of claims 1-4,
- a support frame according to any one of claims 5-7; and
- a freight frame according to claim 8.

10. Freight securement assembly according to claim 9, further comprising a second latching element for latching the freight frame to the second body part of the securement body.

11. Freight securement assembly according to claim 10, wherein the latching element is a rod with a length dimension longer than a width dimension of the support frame.

12. Freight securement assembly according to claim 10 or 11, wherein at least one end of the latching element is provided with a spring element for securing the rod to the freight frame.

13. Freight securement assembly according to claim 12, wherein:
the spring comprises an elongate resilient sheet having an opening near a first extremity of the sheet for receiving the latching element and a frame coupling at a second extremity of the sheet opposite to the first extremity; and
the freight frame comprises a spring coupling arranged to engage with the frame coupling for lockingly and releasably connecting with the frame coupling.

14. Freight securement assembly according to any one of claims 9-13, wherein the through-hole of the second body part of the securement body is parallel to a top surface of a loading platform of the vehicle.
